# EUROPÄISCHE PATENTANMELDUNG

(11) **EP 3 109 812 A1**
(43) Veröffentlichungstag der Anmeldung: **28.12.2016**
(21) Anmeldenummer: 15001839.8
(22) Anmeldetag: 22.06.2015
(51) Int. Cl.: G06Q 10/08, G06Q 10/10, G06Q 40/08

(54) **VERFAHREN ZUR AUTOMATISCHEN ERSTELLUNG, DOKUMENTATION UND VERTEILUNG VON FAHRZEUG-DATEN**

(71) Anmelder: Arbib, Mohamid, 51190 Köln (DE)
(72) Erfinder: Arbib, Mohamid, 51190 Köln (DE)

(57) **Zusammenfassung**

Um Flottenbetreibern, Vermietern oder Käufern und Verkäufern von Kraftfahrzeugen verlässliche Dokumentationen des Fahrzeugzustandes zu geben, wird ein Verfahren vorgeschlagen, bei dem eine Zertifizierungsinstanz die bisherigen Dokumente in einer Datenbank aufbereitet und auswertbar zusammenfasst, sowie eine Blackbox zur laufenden Erfassung und Übertragung der Fahrzeugdaten installiert.

## Beschreibung

### HINTERGRUND DER ERFINDUNG

Fahrzeuge, wie Autos, LKWs, Schiffe und Flugzeuge werden mit einer Vielzahl von Daten-Unterlagen erstellt, die überwiegend noch in Papierform, zunehmend jedoch in Datenbasen gespeichert und dokumentiert werden.
Da es jeweils wertvolle Wirtschaftsgüter sind, deren Erhaltungsbedarf erhebliche Kosten verursacht und die auch in gebrauchtem Zustand ge- und verkauft werden, besteht die Notwendigkeit diese Aufwendungen zu erfassen und im Falle einer Nutzungs- oder Eigentums-Übertragung nachweisbar zu dokumentieren.

### PROBLEMSITUATION

Bislang ist dieser Nachweis nur sehr eingeschränkt möglich. So sind z.B. Betriebsstunden , Laufzeiten und Wartungsintervalle in manchen Systemen intern gespeichert, jedoch durch den Medienbruch der Dokumentation zur Papierform aber schwer zu übersehen und durchgehend zu dokumentieren. Dies führt zu einer Vielzahl von Manipulationsmöglichkeiten, wie bei der Fälschung von Kilometerleistungen in Tachometern vielfach bekannt. Solche Verstösse sind aber bislang nur in gravierenden Fällen technisch nachweisbar.

Andererseits ist es auch für Verkäufer schwierig, Fahrzeuge voll dokumentiert zu übergeben; hierbei wäre immer ein Konvolut von Dokumenten zu übertragen. darunter Prüfberichte, die oft nur schwer noch sachlich zuzuordnen sind, Schadensmeldungen und Gutachten, Servicerechnungen etc. neben den offiziellen Fahrzeugdokumenten.

### STAND DER TECHNIK

Bislang sind zwar zahlreiche singuläre Erfassungsmöglichkeiten bekannt:
So mit US 6.169.943 eine lokale Steuereinheit mit instalierter Diagnose-Software am Fahrzeug, bei US 6.181.994 eine am Fahrzeug vorinstallierte Datenbasis mit Übertragung zu einem Kundencenter, mit US 6.285.931 von Denso eine interne Fahrzeugdiagnose mit Übertragung an eine Zentrale.
Aber auch mit DE 1992 18 46 A1 von Bosch ein Diagnosestecker für externe Prüfgeräte und Rechner (z.B. auch Handy), mit DE 1993 33 34 A1 von IVECO ein Ferndiagnose-System für LKW per Betriebsfunk, DE 1014 59 06 A1, nochmals von Bosch, ein Diagnose-System via GPS/GSM und UMTS und DE 10 2006 009 098 A1 von Daimler eine Ferndiagnose, übermittelt per Autoradio.
Weiter beschreibt CN 102 996 210 eine Ferndiagnose mit Emissionsmessung und CN 202 906 189 , das sich auf Onboard-Diagnose mit Übertragung der GPS-Daten per GSM bzieht,.

Trotz dieses Einzellösungen und Ansätze ist bisher aber kein System bekannt, das solche Daten erfasst, konsolidiert und aufbereitet, so dass sie in einer Art "Kfz-Gesundheitskarte" Werkstätten, aber auch Flottenbetreibern, Leasinggebern und Ein- und Verkäufern von Fahrzeugen eine gut zugängliche Informationsbasis geben könnten.

### LÖSUNG

Es wird daher ein Verfahren vorgeschlagen, bei dem eine Zertifizierungsinstanz die Fahrzeugdaten bei der Auslieferung übernimmt (oder einmalig erfasst) und in einer Datenbank dokumentiert, sowie eine "Blackbox" im Fahrzeug installiert, die alle Daten des internen Diagnosesystems, des Fahrzeug-Bussystems und die Ortsdaten via GPS o.ä., bzw. Funkzellenortung etc. mitschreibt, aus denen sich auch Fahrtstrecken und spezifische Belastungen ermitteln lassen.
Hier bietet sich auch an, die von Versicherungen vorgeschlagene Systeme zur Prämienreduzierung mit "Pay as you Drive" zu integrieren.
Ob die Daten in einer Zentralstelle gesammelt und aus der Blackbox vom Fahrzeug regelmäßig per Funkburst dorthin übertragen werden, oder in ihr auslesbar gespeichert bleiben, kann dabei offen bleiben.

Andererseits werden die noch in Papierform vorliegenden bzw. eingehenden Dokumente jeweils eingescannt und mit einem Kennziffer-Ordnungssystem so zugeordnet, dass ihr Zusammenhang leicht erkennbar und auswertbar ist.

Im Effekt ist es dann so, dass bei einem anstehenden Verkauf die kompletten Fahrzeugdaten übertragbar wären, aber z.B. in Verkaufsplattformen nur nach Berechtigung durch den Verkäufer zugänglich sind. So ist es nahe liegend, zunächst nur den allgemeinen Verkaufszustand zu veröffentlichen und differenzierte Daten nach einzelnen Schritten der Verkaufsverhandlungen, oder nach einem Vertrauens-Scoring offen zu legen. Da dies aber verzögerungsfrei erfolgen kann, lässt sich dies in automatisierte Handelssysteme einbinden.
So steigt dadurch die Markttransparenz, die Effizienz der Kontraktfindung und damit die Handelsleisung.

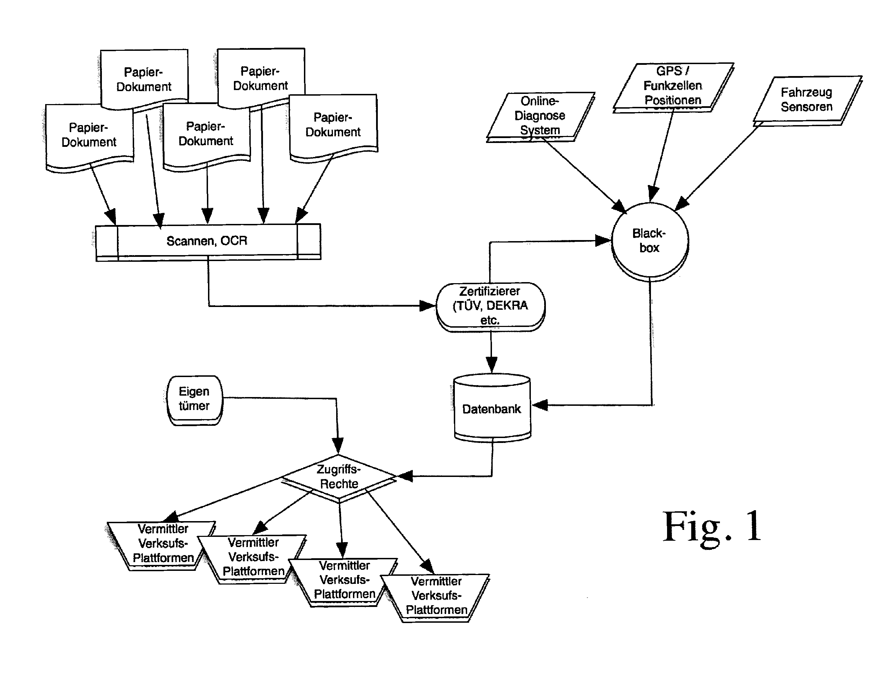

### Beschreibung anhand der Zeichnung Fig. 1

Fig. 1 beschreibt den Ablauf des Verfahrens:
Die bestehenden Dokumente des Fahrzeugs in Papierform 1 bis 4, wie Kaufvertrag, Kfz-Schein, Versicherungsunterlagen, Wartungsprotokolle etc. werden Eingescannt und mit OCR (Optical Character Recognition = Zeichenerkennung) für eine Datenbank 5 so aufbereitet, dass die einzelnen Daten per Schlagwort und/oder Kategorisierungs/Retrieval-System zugänglich sind. Diese werden vom Zertifizierer 4 überprüft und in die Datenbank 5 eingestellt. Daneben installiert der Zertifizierer 4 oder eine von Ihm überprüfte Organisation ein Blackbox 6 im Fahrzeug, die laufend Daten aus dem Betriebssystem (z.B. über den Fahrzeug-Diagnose- Stecker) 7, aber auch einem GPS-Modul 8 und weiterer, ausgewählter Sensoren 9 aufzeichnet und entweder zur periodischen Übermittlung speichert, oder sofort per Mobilfunk in die Datenbank übermittelt.
Der Eigentümer 9 gibt diese Daten selektiv an Interessenten über Vermittler und Verkaufsplattformen 10 bis 14 - ergänzend zu eingestellten Bildern und Angebotstexten - zur Abfrage frei.

## Patentansprüche

1. Verfahren zur automatischen Erstellung, Dokumentation und Verteilung von Fahrzeug-Daten, **dadurch gekennzeichnet, dass** in Schriftform vorliegende Dokumente in eine Datenbasis übertragen und und mit erfassten Parametern und Daten einer im Fahrzeug installierten "Blackbox" konsolidiert werden.

2. Verfahren zur automatischen Erstellung, Dokumentation und Verteilung von Fahrzeug-Daten nach Anspruch 1, **dadurch gekennzeichnet, dass** schriftliche Dokumente eingescannt, mit Schrifterkennung und Zuordnung von Begriffsfeldern aufbereitet und gespeichert werden.

3. Verfahren zur automatischen Erstellung, Dokumentation und Verteilung von Fahrzeug-Daten nach Anspruch 1, **dadurch gekennzeichnet, dass** ein gesicherter Datenspeicher (Blackbox) von einer Zertifizierungsinstanz oder von ihr Beauftragten im Kfz montiert und mit Datengebern verbunden wird.

4. Verfahren zur automatischen Erstellung, Dokumentation und Verteilung von Fahrzeug-Daten nach Anspruch 3, **dadurch gekennzeichnet, dass** die Blackbox mit dem Diagnose-System des Fahrzeugs verbunden ist und dessen Daten übernimmt.

5. Verfahren zur automatischen Erstellung, Dokumentation und Verteilung von Fahrzeug-Daten nach Anspruch 3, **dadurch gekennzeichnet, dass** die Blackbox die Positionsdaten von Systemen wie GPS und Funkzellenortung aus entsprechend montierten oder abfragbaren Systemen übernimmt und zur Ermittlung von Fahrtstrecken und -Bedingungen registriert.

6. Verfahren zur automatischen Erstellung, Dokumentation und Verteilung von Fahrzeug-Daten nach Anspruch 3 bis 5, **dadurch gekennzeichnet, dass** die Daten der Blackbox in einem auslesbaren, aber gegen Manipulation gesichertem elektronischem Speicher hinterlegt werden.

7. Verfahren zur automatischen Erstellung, Dokumentation und Verteilung von Fahrzeug-Daten nach Anspruch 3 bis 5, **dadurch gekennzeichnet, dass** die Daten sequenziell per Funkburst oder Mobilfunk an die Datenbank des Zertifizierers übertragen werden.
